Europäisches Patentamt

European Patent Office

Office européen des brevets

(11) Numéro de publication : **0 443 902 B1**

(12) **FASCICULE DE BREVET EUROPEEN**

(45) Date de publication du fascicule du brevet :
**13.07.94 Bulletin 94/28**

(51) Int. Cl.⁵ : **H01S 3/106, H01S 3/137**

(21) Numéro de dépôt : **91400324.9**

(22) Date de dépôt : **11.02.91**

(54) **Laser fournissant deux ondes à des fréquences différentes.**

(30) Priorité : **13.02.90 FR 9001687**

(43) Date de publication de la demande :
**28.08.91 Bulletin 91/35**

(45) Mention de la délivrance du brevet :
**13.07.94 Bulletin 94/28**

(84) Etats contractants désignés :
**DE GB IT**

(56) Documents cités :
**WO-A-85/04055**
**US-A- 3 506 362**
**SOVIET JOURNAL OF QUANTUM ELECTRO-**
**NICS, vol. 18, no. 2, février 1988, pages**
**166-171; V.G. GUDELEV et al.: "Two-frequency**
**gas laser in mutually orthogonaltransverse**
**magnetic fields"**

(73) Titulaire : **SOCIETE D'APPLICATIONS**
**GENERALES D'ELECTRICITE ET DE**
**MECANIQUE S A G E M**
**6, Avenue d'Iéna**
**F-75783 Paris Cedex 16 (FR)**

(72) Inventeur : **Bretenaker, Fabien**
**13 Rue Xaintrailles**
**F-75013 Paris (FR)**
Inventeur : **Le Floch, Albert**
**Avenue du Général Leclerc**
**F-35042 Rennes Cédex (FR)**

(74) Mandataire : **Fort, Jacques**
**CABINET PLASSERAUD**
**84, rue d'Amsterdam**
**F-75009 Paris (FR)**

## Description

La présente invention a pour objet un laser fournissant deux ondes à des fréquences différentes, très proches l'une de l'autre. Elle trouve des applications dans tous les domaines de la mesure mettant en oeuvre un effet hétérodyne, en particulier en métrologie ; elle est également applicable en spectrométrie optique.

On connaît déja des lasers fournissant deux ondes à des fréquences différentes, ayant des polarisations linéaires mutuellement orthogonales, comprenant un milieu laser placé dans une cavité résonante laser délimitée par des miroirs et associée à des moyens d'excitation du milieu laser et comprenant un composant biréfringent placé sur le trajet des deux ondes.

L'article "Two frequency gas laser in mutually orthogonal transverse magnetic fields" de Gudelev et al, Sov. J. Quantum electron. 18(2), Février 1988, page 166 décrit un laser à décharge hélium-néon du type ci-dessus, dans lequel des zones distinctes du milieu actif laser sont soumises à des champs magnétiques orthogonaux l'un à l'autre, le composant biréfringent étant constitué par une des fenêtres délimitant la cavité, soumise à une contrainte de compression.

Un tel laser permet effectivement d'obtenir deux ondes ayant une différence de fréquence fonction de l'anisotropie linéaire de phase, pouvant atteindre 50 MHz dans l'exemple donné par le document ci-dessus, utilisant une cavité de résonance de 31 cm de longueur.

Indépendamment de sa complexité, le laser décrit dans le document ci-dessus, ainsi que les autres lasers déjà proposés pour générer deux ondes à fréquences différentes, présente des inconvénients. Du fait que le chemin optique est le même pour les deux ondes, les modes d'oscillation sont très fortement couplés et il est difficile d'obtenir des oscillations simultanées dans les deux états propres sans interaction. Le règlage de la différence de fréquence est difficile et peu fiable, car il s'effectue par modification d'une contrainte difficile à évaluer et non pas par déplacement d'un composant.

Un laser selon le préambule de la revendication 1 est décrit dans le document US-A-3 506 362.

La présente invention vise à fournir un laser à deux fréquences du type ci-dessus défini dans lequel les deux ondes sont suffisamment découplées dans le milieu laser, pour que les phénomènes d'accrochage soient très réduits.

Dans ce but l'invention propose notamment un laser caractérisé en ce que le milieu laser est à un emplacement de la cavité où les deux ondes sont séparées spatialement et en ce que deux lames quart d'onde, dont une présente des lignes neutres à sensiblement 45° des axes de polarisation du composant biréfringent, sont placées sur le trajet des deux ondes pour donner à ces ondes une polarisation hélicoïdale entre les lames.

En orientant la lame quart d'onde (la plus proche du composant biréfringent) à 45° des axes de polarisation de ce composant, on équilibre les intensités lumineuses des deux ondes, et on évite une polarisation elliptique. Les deux ondes correspondent à deux états propres fonctionnant indépendamment l'un de l'autre du fait que les ondes sont séparées spatialement dans le milieu laser. Les lames quart d'onde et le composant biréfringent peuvent être placés de façon que les trajets des deux ondes soient séparés spatialement dans toute la cavité résonante laser, mais il n'est pas indispensable de remplir cette condition, qui impose des contraintes.

L'invention permet également de régler aisément la différence entre les deux fréquences, dans un domaine allant de zéro jusqu'à une valeur fixée par l'intervalle inter-modes de la cavité, par rotation de la lame quart d'onde la plus éloignée du composant biréfringent, dont l'orientation n'a que peu d'influence sur l'équilibre des intensités. Ce réglage peut être complété par un réglage de longueur de la cavité permettant d'ajuster la fréquence moyenne des deux ondes, c'est-à-dire des deux états propres de la cavité. Du fait que les variations de fréquence moyenne restent toujours très faibles, les lames restent sensiblement quart d'onde même lors de la mise en action d'un tel réglage.

Le composant biréfringent sera généralement un cristal de type courant, permettant de séparer un faisceau incident non polarisé en un faisceau ordinaire et un faisceau extraordinaire ayant des polarisations rectilignes mutuellement perpendiculaires. Il n'est pas indispensable que la polarisation des faisceaux ordinaire et extraordinaire soit absolue, car la polarisation est renforcée par le fonctionnement de la cavité de résonance et du milieu actif laser.

L'invention est susceptible d'être mise en oeuvre dans des lasers de type très varié, notamment dans les lasers à décharge à gaz et même les lasers à colorant.

Le laser selon l'invention est défini dans la revendication 1. Différents modes particuliers de réalisation de cette invention sont décrits dans les revendications dépendantes.

L'invention sera mieux comprise à la lecture de la description qui suit de modes particuliers de mise en oeuvre de l'invention, donnés à titre d'exemples non limitatifs. L'invention se réfère aux dessins qui l'accompagnent, dans lesquels :

- la figure 1 est un schéma, où l'échelle n'est pas respectée, montrant la disposition relative des composants principaux d'un laser suivant un premier mode de réalisation ;
- la figure 2 est un schéma de circuit de réglage utilisable avec le laser de la figure 1 ;

- les figures 3,4 et 5 similaires à la figure 1, montrent des variantes de réalisation.

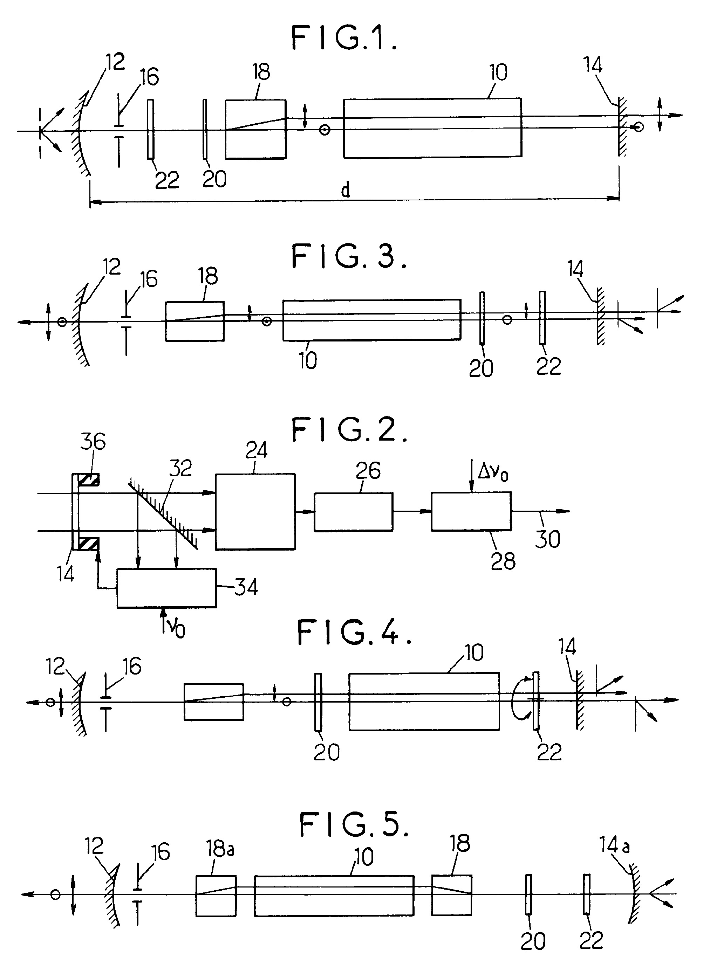

Le laser de la figure 1 comporte, de façon classique, une enceinte 10 contenant le milieu laser, placée dans une cavité résonante délimitée par des miroirs 12 et 14 à coefficient de réflexion proche de 100 % à la fréquence moyenne de fonctionnement. Suivant une disposition classique, l'un des miroirs 14 est plan tandis que l'autre miroir 12 est sphérique et centré sur le miroir 14. Un diaphragme 16 placé à proximité du miroir 12 sélectionne le mode transverse fondammental $TEM_{00}$.

Suivant l'invention la cavité contient les composants permettant la génération de deux ondes à fréquences différentes. La position du diaphragme 16 et celle de ces composants montrés en figure 1 sont telles que les états propres, c'est-à-dire les trajets des ondes, sont séparés spatialement dans une fraction de la cavité délimitée par le miroir 14 qui doit en conséquence être un miroir plan.

Les composants destinés à provoquer la génération de deux ondes ayant des trajets séparés dans le milieu laser comprennent un cristal biréfringent 18 ayant des axes propres qu'on supposera être respectivement parallèle et perpendiculaire au plan de la figure. Une première lame 20, quart d'onde pour la fréquence moyenne des deux modes, est placée à proximité du cristal biréfringent 18, du côté de ce cristal où le faisceau ordinaire et le faisceau extraordinaire suivent le même trajet. Les lignes neutres de la lame quart d'onde 20 sont à 45° des axes propres de polarisation du cristal biréfringent 18, afin d'équilibrer les intensités lumineuses des deux modes excités dans la cavité. Une seconde lame quart d'onde 22, également placée sur le trajet commun des deux faisceaux est plus éloignée du composant 18 que la lame 20. Si on souhaite pouvoir régler la différence $\Delta\nu$ entre les fréquences propres des deux modes, la lame 22 est prévue de façon à pouvoir être orientée autour de l'axe du faisceau.

Si on désigne par :
- c la vitesse de la lumière,
- d la longueur de la cavité résonante,
- $\rho$ l'angle que font les lignes neutres de la lame 22 avec les axes de polarisation propres du cristal 18,
- $\phi$ le déphasage entre l'onde extraordinaire et l'onde ordinaire provoqué par la traversée du cristal.

La différence $\Delta\nu$ entre les fréquences propres est :
$$\Delta\nu = (c/2d)[(2\rho/\Pi) - (\phi/\Pi) - (1/2)] \quad (1)$$

La formule (1) montre qu'en principe on peut ajuster la différence de fréquence $\Delta\nu$ dans tout l'intervalle allant de zéro à c/2d, c'est-à-dire dans l'intervalle spectral libre de la cavité entre deux modes. Dans la pratique cependant, des effets d'accrochage interdisent de réduire la différence au-dessous d'un seuil qui, en général, est de quelques KHz.

Le laser peut être muni d'un dispositif de maintien automatique de la différence de fréquence à une valeur déterminée, par commande de la lame 22. Il peut être également muni de moyens permettant d'ajuster et/ou de stabiliser la fréquence moyenne des deux états propres dans un domaine qui est limité par la loi de variation du gain dans le milieu laser. La figure 2 montre schématiquement un circuit permettant de maintenir automatiquement la moyenne des deux fréquences à une valeur $\nu0$ et la différence à une valeur $\Delta\nu0$, ces deux valeurs étant elles-mêmes réglables.

Le circuit montré en circuit 2 comporte dans ce but un détecteur 24 de battement optique des deux ondes, recueillant les flux de fuite à travers le miroir 14. La fréquence de battement est isolée à l'aide d'un filtre 26 auquel est appliqué le signal électrique de sortie du détecteur 24. Un comparateur 28 entre le signal représentatif de la différence réelle des fréquences et une valeur de consigne $\Delta\nu0$ fournit, sur sa sortie 30, un signal d'erreur utilisé pour commander un organe de mise en rotation de la lame 22, tel qu'un moteur pas à pas.

Une fraction de l'énergie lumineuse des ondes peut être séparée, à la sortie du miroir 14, par une lame semi-transparente 32 et attaquer un circuit 34 d'asservissement de la longueur d'onde, qui règle par exemple la longueur d de la cavité par action sur une céramique piézoélectrique 36 portant le miroir 14, de façon à équilibrer les intensités des deux ondes.

Dans l'espace compris entre les deux lames quart d'onde 20 et 22, les deux ondes stationnaires ont une polarisation hélicoïdale. Au contraire, les deux ondes ont des polarisations croisées, chacune à 45° des lignes neutres de la lame quart d'onde adjacente, en dehors de cet espace. Cela se traduit, dans le laser de la figure 1, par le fait que :
- les deux directions de polarisation orthogonale dépendent de l'orientation de la lame 22 à la sortie du miroir 12, là où les chemins optiques de propagation sont confondus,
- les axes de polarisation croisés correspondent aux polarisations propres du cristal biréfringent 18 dans le milieu laser 10 et à la sortie du miroir 14.

Suivant les propriétés que l'on souhaite obtenir pour les faisceaux de sortie, on choisira le mode de réalisation de la figure 1 ou l'un de ceux qui seront maintenant décrits, afin d'obtenir :
- des polarisations fixes ou commandées par l'orientation de la lame 22,
- des chemins optiques de propagation confondus ou séparés d'un côté et/ou de l'autre de la cavité laser résonante.

Dans le mode de réalisation montré en figure 3 (où les éléments correspondant à ceux de la figure 1 sont désignés par le même numéro de référence) les lames quart d'onde 20 et 22 sont placées entre le milieu laser occupant l'enceinte 10 et le miroir plan 14. La lame quart d'onde 20 la plus proche du cristal biréfringent 18 a des lignes neutres à 45° des directions de polarisation propres du cristal 18. Dans ce mode de réalisation, les directions de polarisation des ondes sortant de la cavité laser par le miroir plan 14 et suivant des trajets optiques différents tournent avec la lame 22.

Dans le mode de réalisation de la figure 4, les lames quart d'onde 20 et 22 sont placées chacune d'un côté du milieu laser 10, ce qui conduit à des polarisations ayant les mêmes propriétés que sur la figure 3.

Dans le mode de réalisation de la figure 5, les composants destinés à provoquer la formation de deux modes sont prévus de façon que la zone de la cavité dans laquelle les états propres d'oscillation sont séparés spatialement n'atteigne aucun des deux miroirs 12 et 14a, qui peuvent en conséquence être l'un et l'autre des miroirs concaves. Ces composants comprennent un second cristal biréfringent 18a, identique au premier, placé dans la cavité de manière à ce que les axes de propagation des deux états propres soient confondus en dehors d'une zone entourant le milieu actif laser, en particulier près des deux miroirs ; le système ainsi constitué à une meilleure résistance aux déformations de la cavité.

Dans le mode de réalisation de la figure 5, la différence de fréquence $\Delta\nu$ est donnée par la formule :

$$\Delta\nu = (c/2d)[(2\rho/\Pi) - (2\phi/\Pi) - 1/2)] \quad (1bis)$$

Elle est encore en principe ajustable entre 0 et c/2d.

La description qui précède montre que le laser n'ajoute, aux constituants classiques d'un laser, que des composants simples. Il peut notamment comporter un tube à décharge dans le mélange He-Ne, à 3,39 µm ou 633 nm, un cristal biréfringent et deux lames quart d'onde délimitant un espace ne contenant pas le cristal, mais pouvant contenir le milieu actif (figure 4) ou non (figures 1, 3 et 5). Mais, dans tous les cas, deux états propres simultanés découplés spatialement dans le milieu actif apparaissent.

## Revendications

1. Laser fournissant deux ondes à des fréquences différentes, ayant des polarisations linéaires mutuellement orthogonales, comprenant un milieu laser placé dans une cavité résonante laser délimitée par des miroirs et associée à des moyens d'excitation du milieu laser et comprenant un composant biréfringent placé sur le trajet des deux ondes, caractérisé en ce que le milieu actif laser est à un emplacement de la cavité où les deux ondes sont séparées spatialement et en ce que deux lames quart d'onde (20,22), dont une présente des lignes neutres à sensiblement 45° des axes de polarisation du composant biréfringent (18), sont placées sur le trajet des deux ondes pour donner à ces ondes une polarisation hélicoïdale entre les lames et délimitent un espace dans la cavité ne contenant pas le composant biréfringent.

2. Laser selon la revendication 1, caractérisé en ce que la lame quart d'onde placée à 45° des axes de polarisation du composant biréfringent (18) est la plus proche dudit composant.

3. Laser selon la revendication 2, caractérisé en ce que l'autre lame quart d'onde (22) est orientable.

4. Laser selon la revendication 3, caractérisé par des moyens (24,28) de commande de l'orientation de ladite autre lame pour maintenir la différence de fréquence à une valeur prédéterminée, comprenant des moyens de mesure de la fréquence de battement entre les deux ondes.

5. Laser selon l'une quelconque des revendications précédentes, caractérisé en ce que le milieu laser est encadré par le composant biréfringent (18) et un composant birégringent complémentaire (18a).

6. Laser selon l'une quelconque des revendications précédentes, caractérisé en ce que le composant birefringent est un cristal.

## Patentansprüche

1. Laser mit zwei Wellen verschiedener Frequenz, mit gegenseitig rechtwinkligen linearen Polarisationen, welcher einen Mittellaser, der in einem Laserresonanzhohlraum angeordnet ist, welcher durch Spiegel begrenzt und mit Anregungsmitteln des Mittellasers verbunden ist, und einen doppelbrechenden Bestandteil aufweist, der in der Bahn der beiden Wellen angeordnet ist,
dadurch gekennzeichnet,
daß der aktive Mittellaser an einem Ort des Hohlraums angeordnet ist, wo die beiden Wellen räumlich getrennt sind, und daß zwei dünne Platten (20,22) einer Viertelwelle, von denen eine neutrale Linie mit etwa 45° zu den Polarisationsachsen des doppelbrechenden Bestandteils (18) aufweist, in der Bahn der beiden Wellen angeordnet sind, um diesen Wellen eine schraubenförmige Polarisation zwischen den dünnen Platten zu geben und einen Raum im Hohlraum zu begrenzen, welcher nicht den doppelbrechenden Bestandteil enthält.

2. Laser nach Anspruch 1,
dadurch gekennzeichnet,
daß die dünne Platte einer Viertelwelle, welche mit 45° zu den Polarisationsachsen des doppelbrechenden Bestandteils (18) angeordnet ist, dem Bestandteil am nächsten ist.

3. Laser nach Anspruch 2,
dadurch gekennzeichnet,
daß die andere dünne Platte einer Viertelwelle (22) orientierbar ist.

4. Laser nach Anspruch 3,
gekennzeichnet durch
Mittel (24,28) zur Steuerung der Orientierung der anderen Platte, um die Frequenzdifferenz auf einem vorbestimmten Wert zu halten, wobei die Mittel zur Steuerung Mittel zum Messen der Überlagerungsfrequenz zwischen den beiden Wellen aufweisen.

5. Laser nach irgendeinem der vorangehenden Ansprüche,
dadurch gekennzeichnet,
daß der Mittellaser von dem doppelbrechenden Bestandteil (18) und einem zusätzlichen doppelbrechenden Bestandteil (18a) eingerahmt ist.

6. Laser nach irgendeinem der vorangehenden Ansprüche,
dadurch gekennzeichnet,
daß der doppelbrechende Bestandteil ein Kristall ist.

**Claims**

1. Laser delivering two waves having different frequencies and mutually orthogonal linear polarization directions, comprising a lasing medium in a laser resonating cavity defined by mirrors and associated with means for exciting the lasing medium, and comprising a birefringent component located on the path of the two waves,
characterized in that the active lasing medium is at a location in the cavity where the two waves are spatially separated and in that two quarter wave plates (20, 22), one of which has neutral lines at approximately 45° from the polarization axes of the birefringent component (18), are located on the path of the two waves for helically polarizing said waves between the plates and define a space in the cavity which does not contain the birefringent component.

2. Laser according to claim 1,
characterized in that the quarter wave plate which is located at 45° from the polarization axes of the birefringent component (18) is the closest plate to said component.

3. Laser according to claim 2,
characterized in that the other quarter wave plate (22) is angularly adjustable.

4. Laser according to claim 3,
characterized by means (24, 28) for controlling the angular position of said quarter wave plates to maintain the frequency difference between the two waves at a predetermined value, comprising means for measuring the beat frequency between the two waves.

5. Laser according to any one of the preceding claims,
characterized in that the lasing medium is straddled by the birefringent component (18) and by a supplementary birefringent component (18a).

6. Laser according to any one of the preceding claims,
characterized in that the birefringent component is a crystal.

# FIG.1.

# FIG.3.

# FIG.2.

# FIG.4.

# FIG.5.